# FASCICULE DE BREVET EUROPEEN

(11) **EP 4 234 448 B1**
(45) Date de publication et mention de la délivrance du brevet: **15.01.2025**
(21) Numéro de dépôt: 23176452.3
(22) Date de dépôt: 04.11.2015
(51) Int. Cl.: B65G 15/14

(54) **CONVOYEUR À BROSSES POUR LE TRANSPORT DE PRÉFORMES**
BÜRSTENGLIEDERBAND ZUM TRANSPORT VON VORFORMLINGEN
BRUSH CONVEYOR FOR TRANSPORTING PREFORMS

(30) Priorité: 10.11.2014 FR 1460870
(43) Date de publication de la demande: 30.08.2023
(62) Demande divisionnaire de: 15808703.1
(73) Titulaire: Sidel Participations, 76930 Octeville-sur-Mer (FR)
(72) Inventeur: FEVRE, Sébastien, 76930 Octeville-sur-Mer (FR); DE LIMA, Rui, 76930 Octeville-sur-Mer (FR); TURLOTTE, Denis, 76930 Octeville-sur-Mer (FR); WILLIG, Frédéric, 76930 Octeville-sur-Mer (FR)
(74) Mandataire: Sidel Group

(56) Documents cités:
- EP-A1- 1 291 304
- EP-A1- 2 221 261
- EP-A2- 0 805 117
- WO-A1-2014/076450
- WO-A1-97/10163
- IT-A1- MO20 090 060
- US-A1- 2009 211 880
- US-A1- 2013 327 611

## Description

L'invention a trait au transport d'articles, et plus particulièrement au transport de préformes de récipients en matière plastique tel que PET.

Une préforme comprend généralement un corps tubulaire fermé, à une extrémité inférieure, par un fond hémisphérique, et un col, fileté d'ordinaire, qui prolonge le corps à partir d'une extrémité supérieure de celui-ci. La plupart des préformes sont également munies d'une collerette qui sépare le col du corps et qui facilite la manutention des préformes.

Un cycle de fabrication d'un récipient requiert de nombreuses opérations de manutention de la préforme à partir duquel le récipient est destiné à être fabriqué. A partir d'un conditionnement en vrac dans une trémie (ou un bol, ou tout autre conteneur), la préforme est successivement extraite de la trémie, orientée (col en haut ou col en bas), transférée vers une unité de chauffe (ou four), transportée au défilé dans celle-ci pour y subir un conditionnement thermique, puis encore transférée vers un moule pour y être transformée en récipient par soufflage ou étirage soufflage.

La vitesse de transport des préformes au cours d'un tel cycle n'est pas constante. En particulier, le conditionnement en vrac des préformes dans la trémie ou le bol ne permet pas d'alimenter directement, en sortie de celle-ci (de celui-ci) l'unité de chauffe. On prévoit par conséquent, entre la trémie et l'unité de chauffe, une zone intermédiaire où les préformes sont temporairement accumulées pour permettre une alimentation en continu de l'unité de chauffe.

Pour réaliser cette accumulation, on emploie d'ordinaire un dispositif de transport muni d'une courroie sans fin qui entraîne les préformes par frottement, le long d'un trajet prédéterminé (qui peut être au moins localement linéaire).

Le brevet français FR 2 956 652 ou son équivalent américain US 2012/312661 (SIDEL PARTICIPATIONS) décrit un convoyeur équipé de deux courroies sans fin, dont l'une au moins comporte, au niveau d'une partie active en contact avec les préformes, un matériau naturel constitué de cuir.

Cette solution, qui est actuellement couramment utilisée, donne satisfaction dans la mesure où elle permet de réaliser l'accumulation des préformes de manière efficace et sans endommagement de celles-ci.

Mais le frottement contre les préformes provoque, en premier lieu, une usure rapide du cuir, qui nécessite le remplacement fréquent de la courroie.

En deuxième lieu, le frottement produit une poussière formée de fines particules de cuir qui a tendance à se déposer sur les préformes et sur les organes du convoyeur. Le cuir étant un matériau naturel, la pollution qui en résulte n'est pas nocive, mais il n'est pas admissible de laisser s'accumuler la poussière sur le convoyeur, qui doit par conséquent subir de fréquents nettoyages.

Par ailleurs IT MO20 090 60 A1 divulgue un dispositif de transport selon le préambule de la revendication 1.

Un premier objectif de l'invention est de proposer un dispositif de transport de préformes qui permette une accumulation efficace de celles-ci.

Un deuxième objectif de l'invention est de proposer un dispositif de transport de préformes qui présente une meilleure résistance à l'usure.

Un troisième objectif de l'invention est de proposer un dispositif de transport qui offre une meilleure résistance à l'échauffement.

A cet effet, il est proposé un dispositif de transport de préformes de récipients en matière plastique, ce dispositif comprenant au moins un élément circulant sans fin ayant une face externe et portant une série de brosses qui s'étendent en saillie de la face externe, aptes à venir au contact des préformes pour entraîner celles-ci par frottement le long d'un trajet, ce dispositif comprenant en outre un support fixe définissant une face plane d'appui pour les préformes.

Les brosses entraînent efficacement les préformes par frottement de l'extrémité de leurs poils. Ce frottement génère peu ou pas de poussière (et donc peu de pollution), et l'usure des brosses demeure lente lorsque le matériau choisi (par exemple un Nylon^{®}) est résistant à l'usure par frottement.

Selon un premier mode de réalisation, où chaque préforme présente une paroi tubulaire définissant un corps et un col séparés par une collerette qui fait radialement saillie de la paroi, le dispositif comprend une paire de rails écartés l'un de l'autre, qui définissent conjointement au moins une partie du trajet des préformes, ces rails ayant des faces d'appui coplanaires pour la suspension par leur collerette des préformes orientées col en haut.

Au moins une partie des brosses peut s'étendre sous les rails pour venir au contact du corps des préformes.

Dans ce premier mode de réalisation, le dispositif comprend par exemple un guide de col qui s'étend à l'aplomb des rails à une distance de ceux-ci supérieure ou égale à une hauteur du col des préformes ;

Selon un deuxième mode de réalisation, le dispositif comprend une plaque formant support pour les préformes orientées col en bas, et les brosses s'étendent au-dessus de la plaque.

Dans ce deuxième mode de réalisation, le dispositif peut comprendre un guide de fond qui s'étend à l'aplomb de la plaque, à une distance de celle-ci supérieure ou égale à une hauteur hors tout des préformes.

Le dispositif comprend par exemple deux éléments circulants munis de brosses et ayant, le long du trajet, des brins parallèles pour entraîner conjointement les préformes par frottement.

Le dispositif peut en outre comprendre, sur une partie au moins du trajet, un guide latéral contre lequel s'appuie l'élément circulant par une face interne opposée à la face externe.

Par ailleurs, chaque brosse comprend par exemple une rangée de touffes de poils superposées.

De même, chaque élément circulant peut comprendre des brosses sur toute sa longueur.

D'autres objets et avantages de l'invention apparaîtront à la lumière de la description d'un mode de réalisation, faite ci-après en référence aux dessins annexés dans lesquels :
- la figure 1 est une vue en perspective de dessus d'un dispositif de transport de préformes équipé de courroies munies de brosses, selon un premier mode de réalisation dans lequel les préformes sont transportées col en haut ;
- la figure 2 est une vue de détail, à échelle agrandie, du dispositif de la figure 1 ;
- la figure 3 est une vue en perspective montrant une portion d'une courroie à brosses ;
- la figure 4 est une vue en coupe transversale du dispositif de transport, selon le plan de coupe IV-IV de la figure 2 ;
- la figure 5 est une vue de détail en coupe horizontale du dispositif de transport, selon le plan de coupe V-V de la figure 4 ;
- la figure 6 est une vue de détail en coupe longitudinale du dispositif de transport, selon le plan de coupe VI-VI de la figure 4 ;
- la figure 7 est une vue en coup de détail, à échelle agrandie, illustrant l'entraînement d'une préforme par les poils d'une brosse d'une courroie ;
- la figure 8 est une vue en coupe similaire à la figure 4, illustrant un deuxième mode de réalisation du dispositif de transport, dans laquelle les préformes sont transportées col en bas.

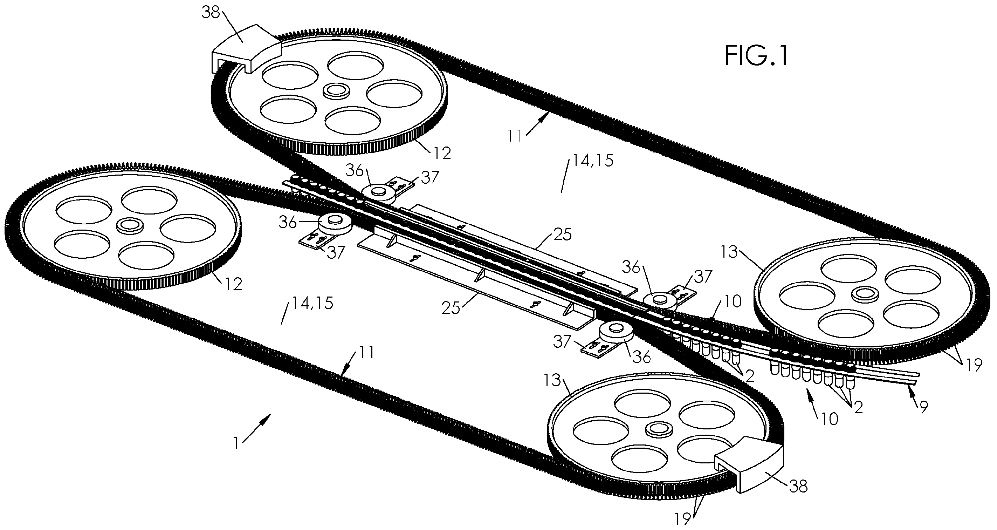

Sur la figure 1 est représenté un dispositif **1** de transport (ou convoyeur) de préformes **2** de récipients en matière plastique, par exemple en polyéthylène téréphtalate (PET).

Chaque préforme **2** présente une paroi **3** latérale tubulaire définissant un corps **4** et un col **5.** Le corps **4** se termine, à une extrémité opposée au col **5,** par un fond **6** hémisphérique. Le col 5 forme un buvant **7** par lequel le récipient est destiné à être rempli. Le col **5** peut être fileté pour permettre le vissage d'un bouchon après ce remplissage.

Selon un mode de réalisation illustré sur les figures, chaque préforme **2** présente en outre une collerette **8** annulaire mise à profit pour faciliter la manutention des préformes **2** (et également des récipients formés à partir de ces préformes **2).**

Dans l'exemple illustré, la collerette **8** s'étend à la jonction entre le corps **4** et le col **5,** mais cette configuration n'est pas limitative. En particulier, la collerette pourrait s'étendre à une extrémité opposée au fond **6,** de sorte à former le buvant du récipient. De même, le col **5** est facultatif, de sorte que la préforme pourrait se limiter à un corps lisse terminé à une extrémité par un fond et, à une extrémité opposée, par une collerette.

En outre, la collerette **8** n'est pas nécessairement continue ; elle peut comprendre plusieurs secteurs angulaires disjoints.

De manière classique, les préformes **2** brutes d'injection sont initialement stockées en vrac dans un conteneur tel qu'une trémie, dont elles sont extraites par des moyens connus (dans une trémie, il s'agit par exemple d'un élévateur ; dans un bol, il s'agit par exemple d'un plateau rotatif associé à un rail hélicoïdal) tout en étant orientées col en haut ou col en bas. A la sortie du conteneur, les préformes **2** sont déversées sur un support **9** linéaire (tel qu'un rail dans le cas de préformes **2** orientées col en haut, comme illustré sur la figure 1) où elles se déplacent en se poussant les unes les autres. Dans certaines zones critiques (notamment à la jonction entre le conteneur et le support **9),** on peut prévoir des systèmes (tels que des soufflettes) destinés à éviter le coincement de préformes **2.**

Les préformes **2** mal orientées à la sortie du conteneur sont réintroduites dans celui-ci au moyen de détrompeurs, de sorte que le flux de préformes **2** sortant du conteneur n'est pas constant. Il en résulte que les préformes **2** ne sont pas nécessairement groupées sur le support **9** linéaire, des trains **10** espacés de préformes pouvant alors se former, comme illustré sur la figure 1. Dans la configuration illustrée, où le support **9** est horizontal, un train **10** isolé de préformes (à droite sur la figure 1) n'avance pas tant qu'un train **10** suivant issu du conteneur ne vient pas le pousser. En variante, pour favoriser l'évacuation des préformes **2** du conteneur, le support **9** peut être incliné.

Les préformes **2** sortant du conteneur sont destinées à être introduites dans une unité de chauffe pour y subir un conditionnement thermique par exposition à des sources de rayonnement électromagnétique (par ex. infrarouge), de sorte à être ramollies en vue d'être formées en récipients par soufflage ou étirage soufflage dans une unité de formage équipée de moules à l'empreinte des récipients.

De l'entrée de l'unité de conditionnement thermique à l'unité de formage, les préformes **2** sont prises en charge individuellement par des moyens de préhension (tels que des tournettes ou des pinces). La mise en route du cycle de formage, qui doit produire des récipients à une cadence de plusieurs dizaines de milliers d'unité par heure, n'est pas subordonnée à la présence de préformes **2,** de sorte qu'en l'absence d'une ou plusieurs préforme(s) dans le flux de préformes sortant de (et donc entrant dans) l'unité de conditionnement thermique, l'unité de formage tourne à vide dans le(s) moule(s) supposé(s) accueillir cette (ces) préforme(s). Il en résulte un gaspillage d'énergie et une diminution de la productivité.

C'est pourquoi un convoyeur **1** tel que représenté sur la figure 1 est interposé entre le conteneur et l'unité de chauffe. Il s'agit d'un convoyeur à accumulation conçu pour, à partir de trains **10** de préformes **2** espacés issus du conteneur, former un flux continu de préformes **2** adjacentes destinées à être prises en charge individuellement.

Le convoyeur **1** comprend un élément **11** circulant sans fin. Dans l'exemple illustré, l'élément **11** circulant est une courroie, c'est-à-dire une bande continue, mais il pourrait s'agir d'une chaîne, formée d'une série bouclée de maillons articulés les uns par rapport aux autres. Dans ce qui suit, on suppose que l'élément **11** circulant est une courroie, ce qui n'exclut pas une autre forme de réalisation (en particulier une chaîne). Comme illustré, la courroie **11** circule sur une paire de poulies ou de roues dentées, à savoir une roue **12** motrice et une roue **13** suiveuse. Chaque roue **12, 13** est montée en rotation sur un bâti **14** comprenant un plateau **15** qui forme un plan horizontal d'appui pour la courroie **11.**

La courroie **11** présente une face **16** interne et une face **17** externe opposées. Selon un mode de réalisation illustré sur les figures, la face **16** interne est crantée pour venir en prise avec les dents des roues **12, 13.** La face **17** externe forme quant à elle une succession de créneaux **18.** Cette configuration confère à la courroie **11** une bonne souplesse.

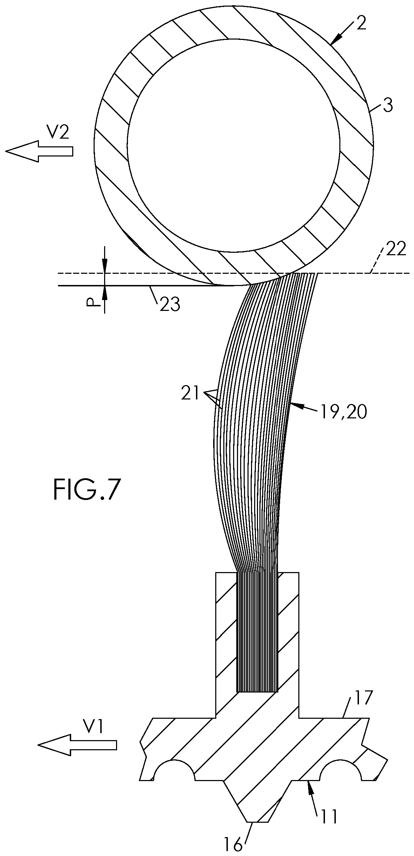

La courroie **11** est entraînée en déplacement à une vitesse notée **V1** sur la figure 7. La courroie **11** porte une série de brosses **19** qui s'étendent en saillie de la face **17** externe. Dans l'exemple illustré, chaque créneau **18** porte une brosse **19,** qui comprend une rangée de touffes **20** superposées de poils **21.**

La courroie **11** est agencée pour venir au contact des préformes **2** pour entraîner celles-ci par frottement le long d'un trajet **T.** Compte tenu de la souplesse de la courroie **11,** ce trajet **T** n'est pas nécessairement plan ; il pourrait en outre être courbe. Toutefois, dans l'exemple illustré, ce trajet **T** est à la fois plan et linéaire et définit une direction dite longitudinale, qui s'étend dans un plan sensiblement horizontal (avec, le cas échéant, une faible pente). On qualifie de transversale toute direction à la fois horizontale et perpendiculaire à la direction longitudinale.

La courroie **11** est de préférence positionnée pour que le plan **22** (matérialisé en trait pointillé sur la figure 7) balayé par les extrémités des poils **21** soit décalé, vers l'intérieur des préformes **2,** du plan **23** (matérialisé par le trait plein sur la figure 7) balayé par la partie du corps **4** des préformes **2** la plus proche de la courroie **11.** Il résulte de ce décalage, dénommé profondeur de passe des brosses **19** et noté **P** sur la figure 7, que les poils **21** de chaque touffe **20** viennent, au cours du déplacement de la courroie **11,** frotter contre la paroi **3** latérale de la préforme **2.** Par leur souplesse, les poils **21** subissent, au contact de la paroi **3,** une flexion qui met les poils **21** sous tension et augmente de ce fait l'effort exercé par chaque touffe **20** sur la paroi **3,** tendant à entraîner la préforme **2** en mouvement. Selon un mode préféré de réalisation, la profondeur **P** de passe est comprise entre 0,5 et 3 mm, et par exemple de l'ordre de 1 mm.

Comme il se produit un glissement des poils **21** sur la paroi **3** latérale, une partie de l'énergie cinétique de la courroie **11** est dissipée à l'interface entre les poils **21** et la paroi latérale **3,** de sorte que la vitesse, notée **V2,** de déplacement des préformes **2,** est inférieure à la vitesse **V1** de déplacement de la courroie **11.**

On pourrait prévoir une unique courroie **11** qui entraînerait les préformes **2** en venant frotter contre elles d'un seul côté. Mais dans une telle configuration, il peut se produire une rotation propre des préformes **2** autour de leur axe, susceptible de diminuer leur vitesse **V2** de déplacement.

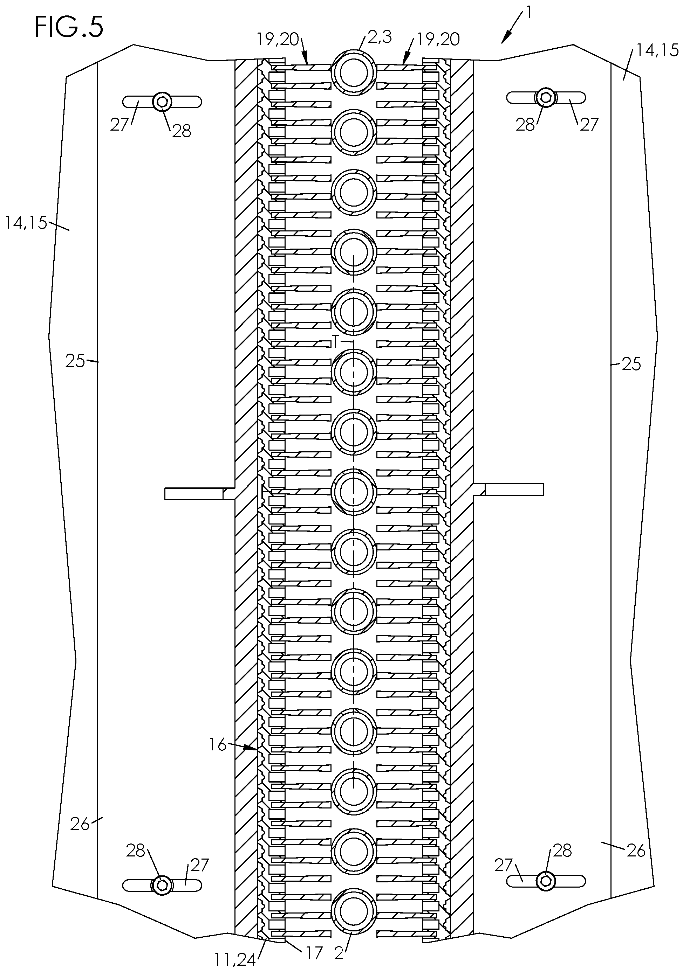

C'est pourquoi, selon un mode de réalisation préféré illustré sur les figures 1, 2, 4 et 5, le convoyeur **1** comprend deux courroies **11** similaires, disposées de part et d'autre du trajet **T.** Plus précisément, les courroies **11** présentent, le long du trajet **T,** des brins **24** parallèles (longitudinaux dans l'exemple illustré) pour entraîner conjointement les préformes **2** par frottement, le long de méridiennes diamétralement opposées sur les préformes **2.** Cette configuration limite le risque de rotation propre des préformes **2** et procure une transmission plus efficace de l'énergie cinétique de la (ou chaque) courroie **11** aux préformes **2.**

Le matériau des poils **21** est avantageusement choisi pour que les efforts de frottement contre la paroi **3** latérale soient suffisamment élevés pour transmettre efficacement aux préformes **2** l'énergie cinétique de la courroie **11,** pour que l'échauffement dû au frottement demeure mesuré (au bénéfice d'une meilleure maîtrise du conditionnement thermique des préformes **2),** pour que l'usure des poils **21** par frottement contre la paroi **3** latérale soit cependant relativement lente, et pour que les éventuelles rayures sur la paroi **3** latérale soient imperceptibles. Les polyamides, et plus particulièrement le Nylon^{®}, procurent l'ensemble de ces avantages. La faible usure des poils **21** garantit une durée de vie importante à la (ou chaque) courroie **11.**

Compte tenu de la relative souplesse de la (ou chaque) courroie **11,** les poils **21** ont tendance, sous l'effet de leur appui contre la paroi **3** latérale des préformes **2,** à transmettre à la courroie **11** un effort transversal qui, si celle-ci demeurait libre, aurait tendance à la faire fléchir et par conséquent à éloigner les brosses **19** des préformes **2** et donc à diminuer les efforts transmis à celles-ci.

Aussi, pour maintenir une certaine rigidité transversale de la (ou chaque) courroie **11** le long du trajet **T,** et ainsi maintenir un effort de frottement relativement important, il est préférable de munir le convoyeur **1** d'un guide **25** latéral, qui s'étend sur une partie au moins du trajet **T** des préformes **2,** et contre lequel la courroie **11** s'appuie par sa face **16** interne.

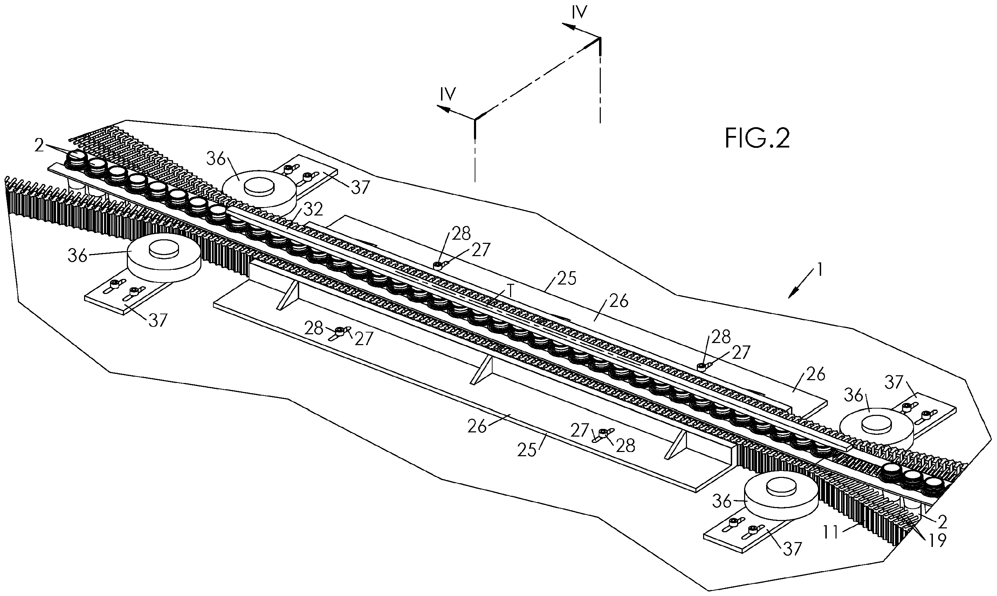

Selon un mode de réalisation illustré sur les figures 2, 4 et 5, la position du guide **25** est réglable transversalement. A cet effet, une partie **26** horizontale du guide **25** est pourvue de trous **27** oblongs dans lesquels sont introduites des vis **28** de fixation du guide **25** sur le plateau **15.** En desserrant les vis **28,** il est possible de mouvoir transversalement le guide **25.** De la sorte, il est possible de régler la profondeur P de passe, et donc l'effort de frottement appliqué par les brosses **19** aux préformes **2.** Ce réglage permet également de compenser au fil du temps l'usure des poils **21** pour maintenir relativement constante la profondeur P de passe.

Comme on le voit sur les figures 2, 4 et 8, le convoyeur **1** comprend un support **29** fixe qui définit une face **30** plane d'appui pour les préformes **2.**

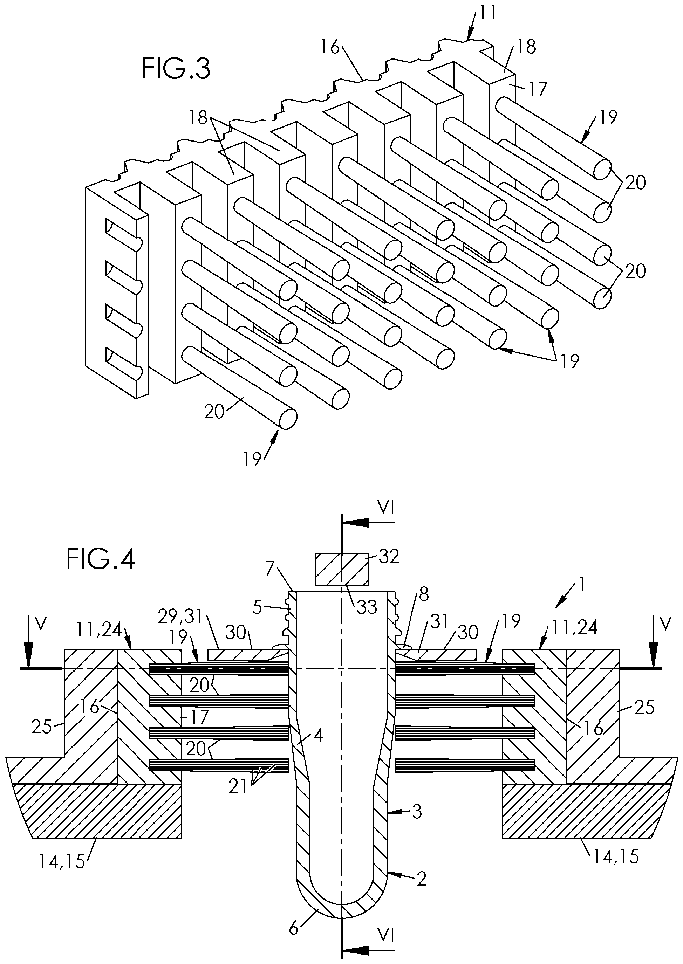

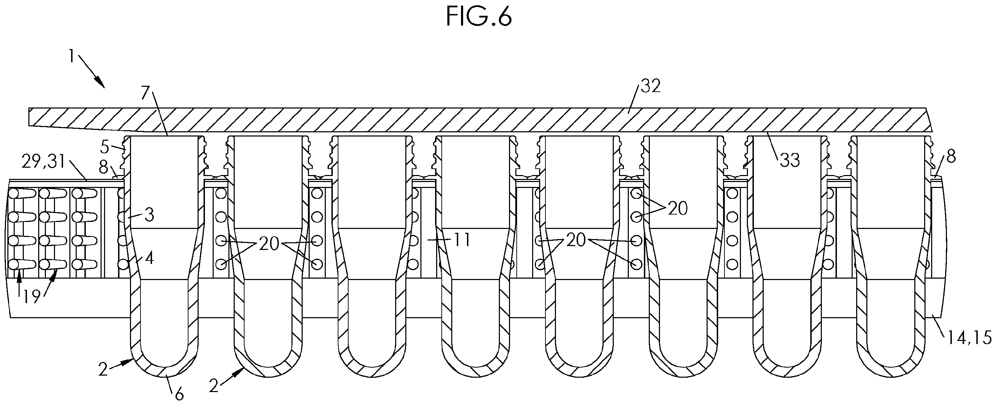

Selon un premier mode de réalisation, illustré sur les figures 4 et 6, les préformes **2,** pourvues d'une collerette **8,** sont orientées col en haut. Le support **29** se présente sous forme d'une paire de rails **31** écartés l'un de l'autre. Les rails **31** définissent conjointement au moins une partie du trajet **T** des préformes **2.** Les rails **31** présentent des faces **30** supérieures d'appui coplanaires, permettant la suspension, par leurs collerettes **8,** des préformes **2** orientées col en haut. L'écartement entre les rails **31** est légèrement supérieur au diamètre sous col des préformes **2.** Le jeu entre les rails **31** et le corps **4** des préformes **2** est suffisant pour permettre le glissement des préformes **2** sans coincement, tout en étant suffisamment faible pour empêcher le passage de la collerette **8** et la chute des préformes **2.**

Dans ce mode de réalisation, au moins une partie des brosses **19** (toutes les brosses **19** dans l'exemple illustré sur la figure 4) s'étend sous les rails **31** pour venir au contact du corps **4** des préformes **2.**

Une partie des brosses **19** pourrait toutefois s'étendre au-dessus des rails **31** pour venir frotter contre le col **5.**

Dans ce premier mode de réalisation, le convoyeur **1** comprend de préférence un guide **32** de col qui s'étend à l'aplomb des rails **31** à une distance de ceux-ci supérieure ou égale à une hauteur du col **5** des préformes **2,** c'est-à-dire qu'un interstice est ménagé entre le guide **32** de col et le buvant **7** de préformes **2.** Ce guide **32** de col a pour fonction d'éviter que les préformes **2** ne se soulèvent et que les collerettes **8** des préformes **2** ne se chevauchent, de sorte à maintenir constante (et égale au diamètre de la collerette **8)** la distance entre deux préformes **2** successives. Dans l'exemple illustré, le guide **32** de col se présente sous forme d'une barre à section rectangulaire, qui présente une face **33** inférieure plane distante du buvant **7** des préformes **2** de quelques dixièmes de millimètres (1 à 2 mm tout au plus).

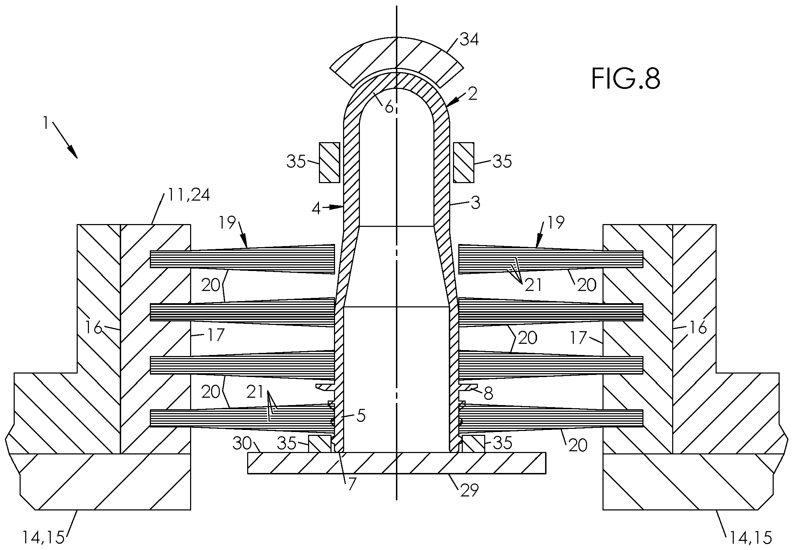

Selon un deuxième mode de réalisation (illustré sur la figure 8), les préformes **2** sont orientées col en bas (et où elles peuvent éventuellement être dépourvues de collerette, bien qu'en disposant dans l'exemple illustré sur la figure 8). Dans ce cas, le support **29** se présente par exemple sous forme d'une plaque sur laquelle les préformes **2** reposent par leur buvant **7.** Dans cette configuration, les brosses **19** s'étendent au-dessus de la plaque **29** et viennent frotter pourrait se présenter sous forme d'une paire de rails sur lesquels les préformes **2** reposeraient par leur collerette (lorsqu'elles en sont pourvues).

Dans ce deuxième mode de réalisation, le convoyeur **1** peut comprendre un guide **34** de fond qui s'étend à l'aplomb de la plaque **29,** à une distance de celle-ci supérieure ou égale à une hauteur hors tout des préformes **2.** Ce guide **34** limite le risque de basculement vers l'avant des préformes **2** sous l'effet des efforts de frottement induits par les brosses **2.** Ce guide **34** peut être mobile pour accompagner les préformes le long de leur trajet et ainsi limiter encore le risque de basculement. Dans ce cas, le guide **34** peut se présenter sous forme d'une bande circulante sans fin montée entre deux poulies.

Pour éviter en outre tout basculement latéral des préformes **2,** des glissières **35** peuvent être prévues, positionnées de part et d'autre du corps **4** et/ou du col **5.**

Comme on le voit notamment sur la figure 1, la (ou chaque) courroie **11** peut comprendre des brosses **19** sur toute sa longueur. L'implantation des brosses **19** peut être verticale ou, en variante, oblique (c'est-à-dire que les différentes touffes peuvent être implantées en quinconce). En outre, le convoyeur 1 peut être équipé de galets **36** tendeurs pour mettre la (ou chaque) courroie **11** sous tension et ainsi éviter les ondulations dans le brin **24** longeant le trajet **T** et y maintenir une orientation constante des poils **21,** au bénéfice de l'efficacité de l'entraînement des préformes **2.** Chaque galet **36** tendeur est par exemple monté sur une platine **37** fixée de manière réglable transversalement sur le plateau **15** du convoyeur **1.**

Diverses dispositions alternatives ou supplémentaires peuvent être prévues.

Premièrement, les brosses **19** pourraient être montées sur plusieurs courroies superposées indépendantes, qui circuleraient par exemple à des vitesses différentes de sorte à maintenir un frottement permanent des brosses **19** avec la paroi **3** latérale des préformes.

Deuxièmement, le convoyeur **1** peut être équipé, comme illustré sur la figure 1, d'un ou plusieurs dispositif(s) **38** de nettoyage (ou décontamination) des brosses **19,** fonctionnant par exemple par aspiration, par exposition aux ultraviolets ou à l'air ionisé. Il en résulte une dépollution du convoyeur **1** (et donc des préformes **2),** et une conformité de celui-ci aux normes sanitaires en vigueur.

Troisièmement, le convoyeur **1** peut être équipé d'au moins un éjecteur de préforme, permettant d'extraire du flux de préformes circulant dans le convoyeur **1** toute préforme qui serait mal orientée et risquerait de provoquer un blocage ou un entremêlement des préformes **2** le long du trajet, susceptible d'abîmer ou de casser l'un au moins des composants du convoyeur **1.** Cet éjecteur se présenterait par exemple sous forme d'une section mobile du support **29,** qui formerait une trappe escamotable commandée par la détection d'une ou plusieurs préforme(s) mal orientée(s).

## Revendications

1. Dispositif (1) de transport de préformes (2) de récipients en matière plastique, du type de préformes destinées à être transformées en récipient par soufflage ou étirage-soufflage, lesquelles préformes sont en matière plastique ayant chacune une paroi (3) tubulaire définissant un corps (4) et un col (5) séparés par une collerette (8) qui fait radialement saillie de la paroi (3), ledit dispositif (1) comprenant un élément (11) circulant sans fin ayant une face (17) externe et portant une série de brosses (19) qui s'étendent en saillie de la face (17) externe, aptes à venir au contact des préformes (2) pour entraîner celles-ci par frottement le long d'un trajet (T), le dispositif (1) comprenant une paire de rails (31) écartés l'un de l'autre, qui définissent conjointement au moins une partie du trajet (T) des préformes (2), ces rails (31) ayant des faces (30) d'appui coplanaires pour la suspension par leur collerette (8) des préformes (2) orientées col en haut, la courroie (11) présentant une face interne (16) opposée à la face externe (17),, ledit dispositif (1) comprenant également un guide (32) de col qui s'étend à l'aplomb des rails (31) à une distance de ceux-ci supérieure ou égale à une hauteur du col (5) des préformes (2), le guidage des préformes par le guide (32) de col évitant que les collerettes (8) de deux préformes successives ne se chevauchent, et un guide (25) latéral sur lequel s'appuie l'élément (11) circulant par la face interne, sur une partie au moins du trajet (T), **caractérisé en ce que** la face externe (17) de la courroie (11) forme une succession de créneaux (18), chaque créneau (18) portant une brosse (19), et **en ce qu'**une partie (26) horizontale du guide (25) est pourvue de trous (27) oblongs dans lesquels sont introduites des vis (28) de fixation du guide (25) sur le plateau (15) pour régler transversalement la position du guide (25).

2. Dispositif (1) de transport selon la revendication 1, **caractérisé en ce qu'**au moins une partie des brosses (19) s'étendent sous les rails (31) pour venir au contact du corps (4) des préformes (2).

3. Dispositif (1) de transport selon la revendication 1, **caractérisé en ce que** toutes les brosses (19) s'étendent sous les rails (31).

4. Dispositif (1) de transport selon l'une quelconque des revendications 1 ou 2, **caractérisé en ce qu'**une partie des brosses (19) s'étend au-dessus des rails (31) pour venir frotter contre le col (5).

5. Dispositif (1) de transport selon la revendication 1 ou 2, **caractérisé en ce que** le guide (32) de col se présente sous forme d'une barre à section rectangulaire, qui présente une face (33) inférieure plane distante d'un buvant (7) des préformes (2) de quelques dixièmes de millimètres.

6. Dispositif (1) de transport selon l'une quelconque des revendications 1 à 5, **caractérisé en ce qu'**il comprend deux éléments (11) circulants munis de brosses (19) et ayant, le long du trajet (T), des brins (24) parallèles pour entraîner conjointement les préformes (2) par frottement.

7. Dispositif (1) de transport selon l'une des revendications précédentes, **caractérisé en ce que** chaque brosse (19) comprend une rangée de touffes (20) de poils (21) superposées.

8. Dispositif (1) de transport selon l'une des revendications précédentes, **caractérisé en ce que** chaque élément circulant (11) comprend des brosses (19) sur toute sa longueur.

9. Dispositif (1) de transport selon l'une quelconque des revendications précédentes **caractérisé en ce que** l'implantation des brosses (19) est verticale.

10. Dispositif (1) de transport selon l'une quelconque des revendications 1 à 8, **caractérisé en ce que** l'implantation des brosses (19) est oblique, c'est-à-dire que les différentes touffes peuvent être implantées en quinconce.

11. Dispositif (1) de transport selon l'une quelconque des revendications précédentes **caractérisé en ce que** les brosses (19) sont montées sur plusieurs courroies superposées indépendantes.

12. Dispositif (1) de transport selon la revendication 11, **caractérisé en ce que** les courroies superposées indépendantes circulent à des vitesses différentes de sorte à maintenir un frottement permanent des brosses (19) avec la paroi (3) latérale des préformes.

13. Dispositif (1) de transport selon l'une quelconque des revendications précédentes, **caractérisé en ce qu'**il comprend un ou plusieurs dispositif(s) (38) de nettoyage ou de décontamination des brosses (19).

14. Dispositif (1) de transport selon la revendication 13, **caractérisé en ce que** le ou les dispositif(s) (38) de nettoyage ou de décontamination fonctionne(nt) par aspiration, par exposition aux ultraviolets ou à l'air ionisé.

15. Dispositif (1) de transport selon l'une quelconque des revendications précédentes, **caractérisé en ce qu'**il comprend au moins un éjecteur de préforme.

## Patentansprüche

1. Vorrichtung (1) zum Transport von Kunststoffbehältervorformlingen (2) der Art von Vorformlingen, die dazu bestimmt sind, durch Blasen oder Streckblasformen zu Behältern geformt zu werden, wobei die Vorformlinge aus Kunststoff sind und jeweils eine rohrförmige Wand (3) aufweisen, die einen Körper (4) und einen Hals (5) definiert, die durch einen Kragen (8) getrennt sind, der radial von der Wand (3) vorsteht, wobei die Vorrichtung (1) ein endlos umlaufendes Element (11) umfasst, das eine Außenseite (17) aufweist und eine Reihe von Bürsten (19) trägt, die sich von der Außenseite (17) vorstehend erstrecken und dazu geeignet sind, mit den Vorformlingen (2) in Kontakt zu kommen, um diese durch Reibung entlang einer Bahn (T) mitzunehmen, wobei die Vorrichtung (1) ein Paar voneinander beabstandeter Schienen (31) umfasst, die gemeinsam zumindest einen Teil der Bahn (T) der Vorformlinge (2) definieren, wobei die Schienen (31) koplanare Auflageflächen (30) zur Aufhängung der mit ihrem Hals nach oben ausgerichteten Vorformlinge (2) an ihrem Kragen (8) aufweisen,
wobei der Riemen (11) eine der Außenseite (17) gegenüberliegende Innenseite (16) aufweist, wobei die Vorrichtung (1) außerdem eine Halsführung (32) umfasst, die sich senkrecht zu den Schienen (31) in einem Abstand zu diesen erstreckt, der größer als oder so groß wie eine Höhe des Halses (5) der Vorformlinge (2) ist,
wobei die Führung der Vorformlinge durch die Halsführung (32) verhindert, dass sich die Kragen (8) von zwei aufeinanderfolgenden Vorformlingen überlagern, und eine Seitenführung (25), auf denen das umlaufende Element (11) über zumindest einen Teil der Bahn (T) mit der Innenseite aufliegt,
**dadurch gekennzeichnet, dass** die Außenseite (17) des Riemens (11) eine Folge von Zinnen (18) bildet, wobei jede Zinne (18) eine Bürste (19) trägt, und dass ein horizontaler Teil (26) der Führung (25) mit Langlöchern (27) versehen ist, in die Schrauben (28) zur Befestigung der Führung (25) an der Platte (15) eingeführt sind, um die Position der Führung (25) in Querrichtung einzustellen.

2. Transportvorrichtung (1) nach Anspruch 1, **dadurch gekennzeichnet, dass** sich zumindest ein Teil der Bürsten (19) unter den Schienen (31) erstreckt, um mit dem Körper (4) der Vorformlinge (2) in Kontakt zu kommen.

3. Transportvorrichtung (1) nach Anspruch 1, **dadurch gekennzeichnet, dass** sich alle Bürsten (19) unter den Schienen (31) erstrecken.

4. Transportvorrichtung (1) nach einem der Ansprüche 1 oder 2, **dadurch gekennzeichnet, dass** sich ein Teil der Bürsten (19) über den Schienen (31) erstreckt, um am Hals (5) zu reiben.

5. Transportvorrichtung (1) nach Anspruch 1 oder 2, **dadurch gekennzeichnet, dass** die Halsführung (32) die Form einer Stange mit rechteckigem Querschnitt aufweist, die eine ebene Unterseite (33) aufweist, die von einer Trinköffnung (7) der Vorformlinge (2) um einige Zehntelmillimeter beabstandet ist.

6. Transportvorrichtung (1) nach einem der Ansprüche 1 bis 5, **dadurch gekennzeichnet, dass** sie zwei umlaufende Elemente (11) umfasst, die mit Bürsten (19) versehen sind und entlang der Bahn (T) parallele Stränge (24) aufweisen, um die Vorformlinge (2) durch Reibung gemeinsam zu bewegen.

7. Transportvorrichtung (1) nach einem der vorangehenden Ansprüche, **dadurch gekennzeichnet, dass** jede Bürste (19) eine Reihe übereinanderliegender Büschel (20) von Borsten (21) umfasst.

8. Transportvorrichtung (1) nach einem der vorangehenden Ansprüche, **dadurch gekennzeichnet, dass** jedes umlaufende Element (11) über seine gesamte Länge Bürsten (19) umfasst.

9. Transportvorrichtung (1) nach einem der vorangehenden Ansprüche, **dadurch gekennzeichnet, dass** die Anordnung der Bürsten (19) vertikal ist.

10. Transportvorrichtung (1) nach einem der Ansprüche 1 bis 8, **dadurch gekennzeichnet, dass** die Anordnung der Bürsten (19) schräg ist, d. h., dass die einzelnen Büschel versetzt angeordnet sein können.

11. Transportvorrichtung (1) nach einem der vorangehenden Ansprüche, **dadurch gekennzeichnet, dass** die Bürsten (19) auf mehreren übereinanderliegenden Riemen montiert sind.

12. Transportvorrichtung (1) nach Anspruch 11, **dadurch gekennzeichnet, dass** sich die unabhängigen übereinanderliegenden Riemen mit unterschiedlichen Geschwindigkeiten bewegen, sodass eine ständige Reibung der Bürsten (19) an der Seitenwand (3) der Vorformlinge aufrechterhalten wird.

13. Transportvorrichtung (1) nach einem der vorangehenden Ansprüche, **dadurch gekennzeichnet, dass** sie eine oder mehrere Vorrichtung(en) (38) zur Reinigung oder Dekontaminierung der Bürsten (19) umfasst.

14. Transportvorrichtung (1) nach Anspruch 13, **dadurch gekennzeichnet, dass** die Vorrichtung(en) (38) zur Reinigung oder Dekontaminierung durch Absaugen, Bestrahlung mit ultraviolettem Licht oder ionisierter Luft funktioniert (funktionieren).

15. Transportvorrichtung (1) nach einem der vorangehenden Ansprüche, **dadurch gekennzeichnet, dass** sie mindestens einen Vorformauswerfer umfasst.

## Claims

1. Device (1) for transporting preforms (2) of containers made of plastic, of the type of preforms that are intended to be transformed into containers by blow-moulding or stretch-blow-moulding, which preforms are made of plastic and each have a tubular wall (3) defining a body (4) and a neck (5) that are separated by a collar (8) that protrudes radially from the wall (3), said device (1) comprising an endless circulating element (11) that has an external face (17) and bears a series of brushes (19) that protrude from the external face (17), which are able to come into contact with the preforms (2) so as to drive them by friction along a path (T), the device (1) comprising a pair of rails (31) that are spaced apart from one another, which jointly define at least a part of the path (T) of the preforms (2), these rails (31) having coplanar bearing faces (30) for the suspension, by their collar (8), of the preforms (2) oriented neck up, the belt (11) having an internal face (16) opposite the external face (17), said device (1) also comprising a neck guide (32) that extends vertically in line with the rails (31) at a distance therefrom that is greater than or equal to a height of the neck (5) of the preforms (2), the guiding of the preforms by the neck guide (32) preventing the collars (8) of two successive preforms from overlapping, and a lateral guide (25) on which the circulating element (11) bears via the internal face, over at least a part of the path (T), **characterized in that** the external face (17) of the belt (11) forms a succession of crenellations (18), each crenellation (18) bearing a brush (19), and **in that** a horizontal part (26) of the guide (25) is provided with oblong holes (27) into which screws (28) are introduced for fastening the guide (25) to the plate (15) so as to transversely adjust the position of the guide (25).

2. Transport device (1) according to Claim 1, **characterized in that** at least some of the brushes (19) extend beneath the rails (31) so as to come into contact with the body (4) of the preforms (2).

3. Transport device (1) according to Claim 1, **characterized in that** all the brushes (19) extend beneath the rails (31).

4. Transport device (1) according to either one of Claims 1 and **2, characterized in that** some of the brushes (19) extend above the rails (31) so as to rub against the neck (5).

5. Transport device (1) according to Claim 1 or 2, **characterized in that** the neck guide (32) is in the form of a bar of rectangular section, which has a flat lower face (33) that is a few tenths of a millimetre away from a mouth (7) of the preforms (2).

6. Transport device (1) according to any one of Claims 1 to **5, characterized in that** it comprises two circulating elements (11) that are provided with brushes (19) and have, along the path (T), parallel strands (24) for jointly driving the preforms (2) by friction.

7. Transport device (1) according to one of the preceding claims, **characterized in that** each brush (19) comprises a row of superposed tufts (20) of bristles (21).

8. Transport device (1) according to one of the preceding claims, **characterized in that** each circulating element (11) comprises brushes (19) over its entire length.

9. Transport device (1) according to any one of the preceding claims, **characterized in that** the installation of the brushes (19) is vertical.

10. Transport device (1) according to any one of Claims 1 to 8, **characterized in that** the installation of the brushes (19) is oblique, i.e. the various tufts can be installed in a staggered manner.

11. Transport device (1) according to any one of the preceding claims, **characterized in that** the brushes (19) are mounted on a plurality of independent superposed belts.

12. Transport device (1) according to Claim 11, **characterized in that** the independent superposed belts circulate at different speeds so as to maintain permanent friction of the brushes (19) with the lateral wall (3) of the preforms.

13. Transport device (1) according to any one of the preceding claims, **characterized in that** it comprises one or more devices (38) for cleaning or decontaminating the brushes (19).

14. Transport device (1) according to Claim 13, **characterized in that** the one or more cleaning or decontaminating devices (38) operate by suction, by exposure to ultraviolet radiation or to ionized air.

15. Transport device (1) according to any one of the preceding claims, **characterized in that** it comprises at least one preform ejector.
